# EUROPEAN PATENT APPLICATION

(11) **EP 2 602 131 A1**
(43) Date of publication of application: **12.06.2013**
(21) Application number: 12193525.8
(22) Date of filing: 21.11.2012
(51) Int. Cl.: B60C 25/138

(54) **Accessory for tyre-changing machines, particularly for the locking of wheel rims for vehicles**

(30) Priority: 07.12.2011 IT MO20110318
(71) Applicant: Giuliano Group S.p.A., 42015 Correggio (RE) (IT)
(72) Inventor: Bonacini, Maurizio, 42015 Correggio (RE) (IT)
(74) Representative: Brunacci, Marco

(57) **Abstract**

The accessory (1) for tyre-changing machines, particularly for the locking of wheel rims for vehicles, comprises supporting means (2) associable in a removable way with a revolving portion (B) of gripping means of the hub of the rim on a tyre-changing machine, at least two gripping jaws (3) of the rim of a wheel associated with the supporting means (2) and moving along a reciprocal approach and away direction between a position of maximum opening, wherein the gripping jaws (3) are arranged at a preset maximum distance, and a position of minimum opening, wherein the gripping jaws (3) are arranged at a preset minimum distance, and movement means (4) associated with the supporting means (2) and with the gripping jaws (3), suitable for moving the gripping jaws (3) between the position of maximum opening and the position of minimum opening.

## Description

The present invention relates to an accessory for tyre-changing machines, particularly for the locking of wheel rims for vehicles.

The use is known of so-called tyre-changing machines which allow fitting and removing tyres onto and off the relative rim of a vehicle wheel, e.g., for carrying out maintenance jobs or replacing the rim and/or the tyre itself.

Such tyre-changing machines generally consist of a base structure supporting means for gripping and placing in rotation the rim of a wheel, having a locking device for the rim, and of at least a tool bearing arm having one or more tools suitable for removing and/or fitting the tyre from and onto the rim.

Different types of means for gripping and placing in rotation the rim of a wheel exist, made up of different types of rim locking spindles.

A first type of means for gripping and placing in rotation the rim is made up of gripping means for gripping the edge of the rim of the wheel.

These gripping means for gripping the edge of the rim can be composed of, e.g., a so-called spindle with clamp lock.

In particular the spindle with clamp lock consists of a fastening plate for the rim, which is fitted on the base structure of the tyre-changing machine in a rotatable way around a central work axis and which has four gripping jaws of the edge of the rim.

The jaws are moving from the centre towards the outside of the plate and vice versa, between a closing configuration, corresponding to the positioning of the jaws at the centre of the plate, and an opening configuration, corresponding to the positioning of the jaws at the periphery of the plate.

Once fastened onto the rim, the jaws are engaged in correspondence to respective sections of the edge of the rim.

A second type of means for gripping and placing in rotation the rim is made up of gripping means for gripping the hub of the rim of the wheel.

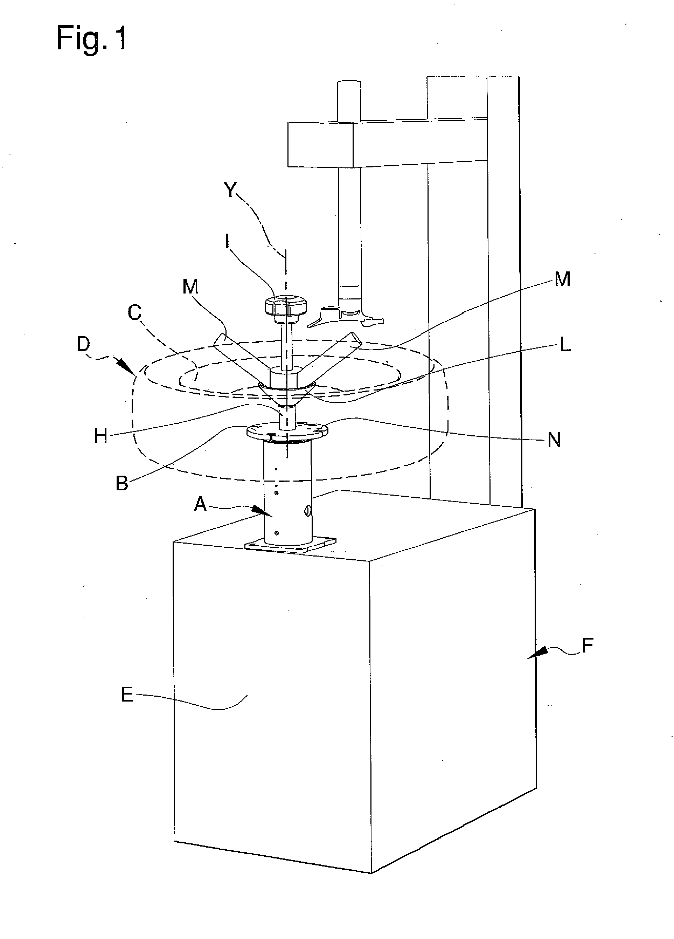

These gripping means for gripping the hub of the rim can be composed of, e.g., a so-called spindle with cone lock, illustrated by way of example in figure 1.

In particular, the spindle A with cone lock comprises a rest plate B for the rim C of a wheel D, which is fitted on the base structure E of a tyre-changing machine F in a way rotatable around a work axis Y, by the action of suitable motor means.

The rest plate B has a threaded central hole G inside which a pin H for locking the rim C is insertable and screwable.

The lock pin H has a thread along all or part of its length and has, in particular, an extremal portion insertable and screwable inside the central hole G on the rest plate B, through the through hole on the rim C, and a grip knob I opposite such extremal portion.

To the pin H is coupled axially rotatable a lock cone L, generally provided with suitable knobs M, suitable for engaging on the rim C in correspondence to the through hole for locking the rim itself on the rest plate B.

During use, the rim C is positioned on the rest plate B, with the through hole of the rim C aligned with the central hole G on the plate.

The above extremal portion of the pin H is screwed inside the central hole G on the plate B, until the cone L is positioned in contact or in any case in the proximity of the rim C, above it.

The screwing up of the cone L on the pin H, done by means of the knobs M, permits positioning the cone itself in contact with the rim C, inside the through hole, and therefore allows locking the rim C on the rest plate B.

A further example of gripping means of the hub of the rim usable on a tyre-changing machine of the conventional type is made up of a spindle rotatable by the action of suitable motor means around a work axis and having a plurality of specific pins.

In particular, such pins can be inserted and fixed inside the holes normally used for housing the bolts for the fixing of the rim to the specific flange on the vehicle.

The gripping means of the hub of the rim of known type can have several drawbacks.

In fact, the fixing of the rim of a wheel in correspondence to or in any case in the proximity of the hub, e.g. by means of a conventional pin having a lock cone, cannot be done for just any type of tyre.

For example, in the case of motor vehicle wheel tyres, in most cases it is not possible to use hub gripping means due to the small dimensions or the absence of the central through hole on the rim and/or of other fixing holes.

In general, in any case, fastening by means of gripping means of the hub of the rim cannot be performed for all those wheels with rims of special dimensions or shapes, without central through hole or other through holes and/or which have through holes of small size or with special arrangements.

The main aim of the present invention is to provide an accessory for tyre-changing machines, particularly for the locking of wheel rims for vehicles, fittable to tyre changing machines having gripping means of the hub of the rim, which allows the correct grip of the rim of all those wheels with rims of special dimensions and shapes, without central through hole or other through holes and/or which have through holes of small size or with special arrangements. Another object of the present invention is to provide an accessory for tyre-changing machines, particularly for the locking of wheel rims for vehicles, that allows to overcome the mentioned drawbacks of the state of the art in the ambit of a simple, rational, easy and effective to use as well as low cost solution.

The above objects are achieved by the present accessory for tyre-changing machines, particularly for the locking of wheel rims for vehicles, characterized by the fact that it comprises supporting means associable in a removable way with at least a revolving portion of gripping means of the hub of the rim on a tyre-changing machine, at least two gripping jaws of the rim of a wheel associated with said supporting means and moving along a reciprocal approach and away direction between a position of maximum opening, wherein said gripping jaws are arranged at a preset maximum distance, and a position of minimum opening, wherein said gripping jaws are arranged at a preset minimum distance, and movement means associated with said supporting means and with said gripping jaws, suitable for moving said gripping jaws between said position of maximum opening and said position of minimum opening.

Other characteristics and advantages of the present invention will become more evident from the description of a preferred, but not sole, embodiment of an accessory for tyre-changing machines, particularly for the locking of wheel rims for vehicles, illustrated purely as an example but not limited to the annexed drawings in which:

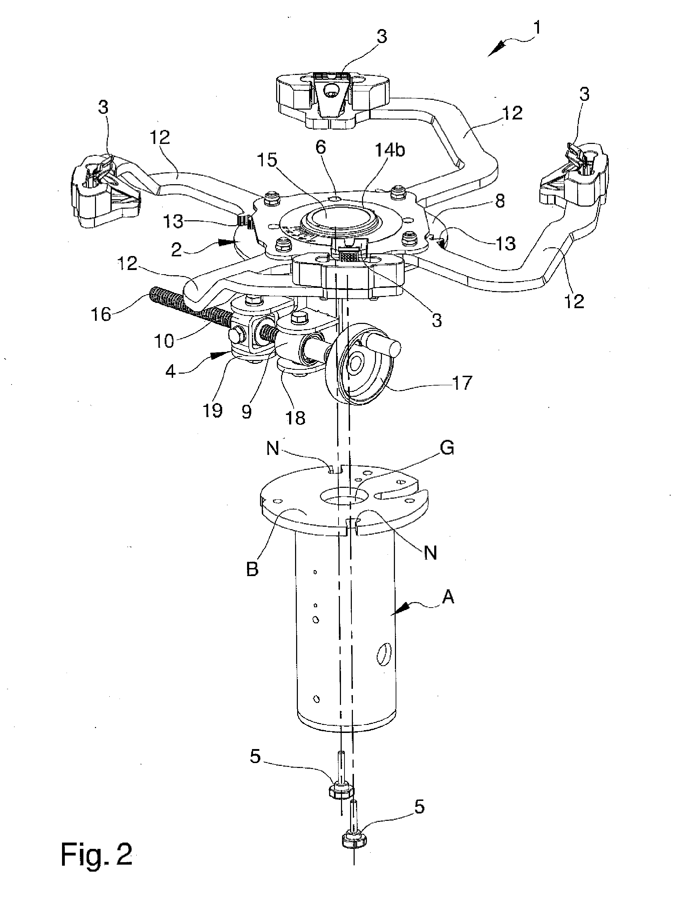

Figure 2 is an axonometric view illustrating the installation of the accessory according to the invention onto a spindle with cone lock of conventional type of the tyre-changing machine in figure 1;

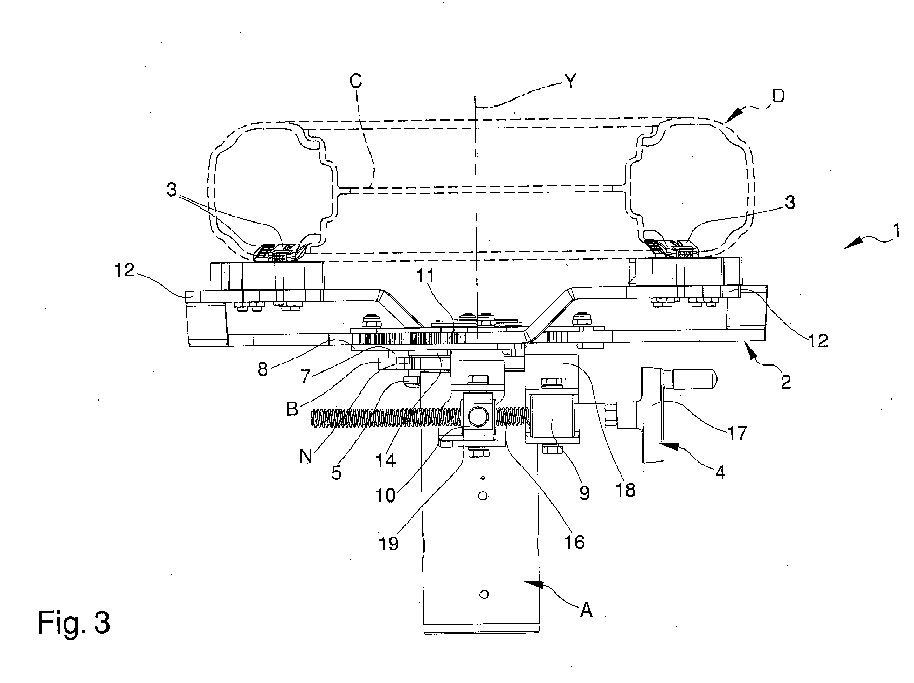

Figure 3 is a side view illustrating the accessory according to the invention installed onto the spindle of the tyre-changing machine in figures 1 and 2;

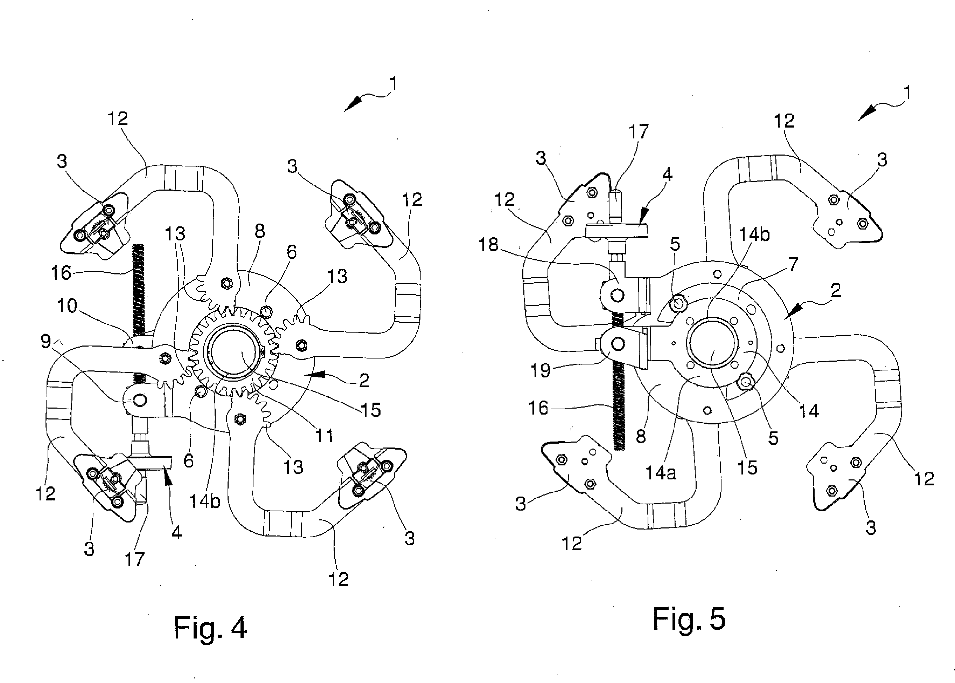

Figure 4 is a plan view of the accessory according to the invention;
Figure 5 is a view from below of the accessory according to the invention. With particular reference to such figures, globally indicated by 1 is an accessory for tyre-changing machines, particularly for the locking of wheel rims for vehicles.

In particular, the accessory 1 can be installed on all those conventional tyre-changing machines having gripping means of the hub of the rim.

For example, the accessory 1 can be installed on a tyre-changing machine F like the one schematically shown in figure 1, having a spindle A with cone lock of known type for gripping and placing in rotation the rim C of a wheel D.

The fitting cannot however be ruled out of the accessory 1 to gripping means of the hub of the rim of different type.

It is pointed out that, by the expression "spindle with cone lock" is meant a spindle A of conventional type, comprising a plate B for resting the rim C of a wheel D, mounted on the base structure E of the tyre-changing machine F in a way rotatable around a central work axis Y, by means of suitable motor means. The plate B has a threaded central hole G inside which a conventional pin H with cone L for blocking the rim C can be fitted and screwed.

Advantageously, the installation of the accessory 1 directly on the spindle A permits a correct grip of the rim of all those wheels having rims with special dimensions or shapes, without central through hole or with through hole of small size, such as not to allow the fitting of the lock pin or such as not to allow the application of the necessary pressure on the rim by means of the lock cone.

In practice, the use of a conventional tyre-changing machine with a spindle with cone lock, together with the use of the accessory 1, allows the locking and the removal/fitting of tyres on any type of wheel.

The accessory 1 comprises supporting means, altogether indicated by the reference 2, associable in a removable way with the plate B of the spindle A.

The accessory 1 also comprises four gripping jaws 3 of the rim C of a wheel D, mobile along respective reciprocal approach and away directions between a position of maximum opening, wherein the gripping jaws 3 are arranged at a preset maximum distance, and a position of minimum opening, wherein the gripping jaws 3 are arranged at a preset minimum distance.

In particular, the four gripping jaws 3 are arranged in correspondence to four substantially opposite positions and are mobile along respective approach and away directions substantially at right angles the one to the other and substantially radial with respect to the work axis Y.

The accessory 1 also comprises movement means, indicated altogether by the reference 4, suitable for moving the gripping jaws 3 between the maximum opening position and the minimum opening position, depending on the specific dimensions of the rim C to be locked on the accessory 1.

Usefully, the supporting means 2 are made up of a support which can be positioned resting on the plate B and the accessory 1 comprises removable fixing means 5 suitable for fixing the support 2 to the plate B.

With special reference to the embodiment of the accessory 1 shown in the illustrations, the removable fixing means 5 are made up of a pair of screws 5 insertable inside the respective through holes N on the plate B, made up of a pair of open slots, and screwable to specific threaded holes 6 for fixing to the support 2.

Different embodiments of the removable fixing means 5 cannot however be ruled out.

Usefully, the support 2 comprises a resting portion 7 which can be positioned in contact with the upper surface of the plate B and a circular plate-shaped element 8 at right angles to the working axis Y, arranged above the resting portion 7. Advantageously, the movement means 4 comprise a fixed element 9 fastened to the plate-shaped element 8 and a moving element 10 connected to the gripping jaws 3.

The movement means 4 comprise motion driving means for transmitting movement from the moving element 10 to the gripping jaws 3.

Usefully, with reference to the particular embodiment of the accessory 1 shown in the illustrations, the driving means are composed of a gear drive system.

In particular, the gear drive system comprises a central crown gear 11 associated revolving with the plate-shaped element 8 and operatively associated with the moving element 10.

The gear drive system also comprises four, suitably shaped, arms 12 which support the gripping jaws 3.

In particular, each of the arms 12 has a first extremity with one of the gripping jaws 3 and a second extremity associated revolving with the plate-shaped element 8 and having at least a toothed portion 13 engaged with the crown gear 11.

The driving means also comprise a supporting element 14 suitable for supporting the moving element 10, associated revolving with the plate-shaped element 8 around the working axis Y and with which is associated integral the crown gear 11.

In particular, the resting portion 7 is substantially arc-shaped and the supporting element 14 has a disc-shaped portion 14a at least in part surrounded by the resting portion 7 and has a cylindrical portion 14b which is fitted to measure into a central hole 15 on the plate-shaped element 8 and revolving around the working axis Y.

The movement means 4 also comprise a rod 16 associated axially rotatable with the fixed element and having a threaded section engaged inside a through and threaded hole made on the moving element 10.

Usefully, the movement means 4 comprise a crank 17 fixed to the rod 16 and having a grip knob.

During use, the operator can, by means of the crank 17, make the rod 16 turn axially, and thus move the moving element 10 and move the gripping jaws 3 between the maximum and minimum opening positions.

In particular, the fixed element 9 is made up of a first bush, hinged to a first bracket 18 extending from the plate-shaped element 8 and pivoting around a first pivoting axis at right angles to the longitudinal axis of the rod 16.

Inside the first bush 9, a first section of the rod 16 is housed to measure and axially rotatable.

The moving element 10, furthermore, is made up of a second bush 10, hinged to a second bracket 19 extending from the supporting element 14 and pivoting around a second pivoting axis at right angles to the longitudinal axis of the rod 16.

The second bush 10 has the threaded hole, inside which a threaded section of the rod 16 is engaged rotatable.

In practice, the axial rotation of the rod 16 by means of the crank 17 allows the approach and away movement of the second bush 10 with respect to the first bush 9, with consequent rotation of the supporting element 14 with respect to the plate-shaped element 8 and, therefore, of the crown gear 11 with respect to the plate-shaped element 8.

This way, the crown gear 11 acts on the toothed portions 13 of the arms 12, moving the gripping jaws 3 between the maximum opening position and the minimum opening position.

It has in point of fact been ascertained how the described invention achieves the proposed objects.

In particular, the fact is underlined that the accessory can be fitted to the gripping means of the hub of the rim of a conventional tyre-changing machine and allows a correct grip of the rim of all those wheels with rims of special size or shape, without central through hole or other through holes and/or having through holes of small size or with particular arrangements.

## Claims

1. Accessory (1) for tyre-changing machines, particularly for the locking of wheel rims for vehicles, **characterized by** the fact that it comprises supporting means (2) associable in a removable way with at least a revolving portion (B) of gripping means of the hub of the rim on a tyre-changing machine (F), at least two gripping jaws (3) of the rim (C) of a wheel (D) associated with said supporting means (2) and moving along a reciprocal approach and away direction between a position of maximum opening, wherein said gripping jaws (3) are arranged at a preset maximum distance, and a position of minimum opening, wherein said gripping jaws (3) are arranged at a preset minimum distance, and movement means (4) associated with said supporting means (2) and with said gripping jaws (3), suitable for moving said gripping jaws (3) between said position of maximum opening and said position of minimum opening.

2. Accessory (1) according to the claim 1, **characterized by** the fact that said revolving portion (B) of the spindle (A) comprises at least a plate (B) revolving around a working axis (Y) due to the action of actuator means of the tyre-changing machine (F), and by the fact that said accessory (1) comprises removable fixing means (5) of said supporting means (2) to said plate (B).

3. Accessory (1) according to the claim 2, **characterized by** the fact that said supporting means (2) comprise at least a support (2) which can be positioned resting on said plate (B) and said removable fixing means (5) comprise at least a screw (5) or the like which can be fitted in at least one through opening (N) on said plate (B) and which can be screwed onto said support (2).

4. Accessory (1) according to the claim 3, **characterized by** the fact that, once said support (2) is associated with said plate (B), said approach and away direction between said gripping jaws (3) is substantially radial to said working axis (Y).

5. Accessory (1) according to one or more of the preceding claims, **characterized by** the fact that said support (2) comprises at least a resting portion (7) which can be positioned in contact with said plate (B).

6. Accessory (1) according to one or more of the preceding claims, **characterized by** the fact that said support (2) comprises at least a plate-shaped element (8) substantially at right angles to said working axis (Y), said gripping jaws (3) being associated with substantially opposite portions of said plate-shaped element (8).

7. Accessory (1) according to one or more of the preceding claims, **characterized by** the fact that said movement means (4) comprise at least a fixed element (9) associated with said supporting means (2) and at least a moving element (10) associated with said gripping jaws (3).

8. Accessory (1) according to the claim 7, **characterized by** the fact that said movement means (4) comprise at least a rod (16) associated axially sliding with said fixed element (9) and having at least a threaded section engaged inside at least a threaded through hole obtained on said moving element (10).

9. Accessory (1) according to the claim 8, **characterized by** the fact that said movement means (4) comprise at least a crank (17) associated with said rod (16) and having at least a grip knob.

10. Accessory (1) according to one or more of the preceding claims, **characterized by** the fact that said movement means (4) comprise driving means (11, 12, 13) of the motion of said moving element (10) to said gripping jaws (3).

11. Accessory (1) according to the claim 10, **characterized by** the fact that said driving means (11, 12, 13) comprise a gear drive system (11, 12, 13, 14).

12. Accessory (1) according to the claim 11, **characterized by** the fact that said gear drive system (11, 12, 13, 14) comprises:
- at least a central crown gear (11) associated revolving with said supporting means (2) and operatively associated with said moving element (10);
- at least two arms (12) which have, respectively, a first extremity with one of said gripping jaws (3) and a second extremity associated revolving with said supporting means (2) and having at least a toothed portion (13) engaged with said crown gear (11).

13. Accessory (1) according to one or more of the claims from 10 to 12, **characterized by** the fact that said driving means (11, 12, 13, 14) comprise at least a supporting element (14) of said moving element (10), associated revolving with said support (2) around said working axis (Y) and having said crown gear (11).

14. Accessory (1) according to the claim 13, **characterized by** the fact that said supporting element (14) has at least a cylindrical portion (14b) fitted to measure into a central hole (15) on said support (2) and revolving around said working axis (Y).

15. Accessory (1) according to one or more of the preceding claims, **characterized by** the fact that it comprises four of said gripping jaws (3), moving along respective approach and away directions.
